# EUROPEAN PATENT APPLICATION

(11) **EP 3 450 208 A1**
(43) Date of publication of application: **06.03.2019**
(21) Application number: 18704390.6
(22) Date of filing: 17.01.2018
(51) Int. Cl.: B60C 9/02

(54) **SAFETY TIRE CAPABLE OF PREVENTING FOUR TYPES OF SAFETY HAZARDS**

(30) Priority: 11.07.2017 CN 201710561166
(71) Applicant: Shandong Fengyuan Tire Manufacturing Co., Ltd., Shandong 277300 (CN)
(72) Inventor: WANG, Zhongjiang, Zaozhuang Shandong 277300 (CN); DU, Yunfeng, Zaozhuang Shandong 277300 (CN); LUO, Jiliang, Zaozhuang Shandong 277300 (CN); NING, Weiming, Zaozhuang Shandong 277300 (CN); KONG, Dongdong, Zaozhuang Shandong 277300 (CN); MA, Jian, Zaozhuang Shandong 277300 (CN); ZHENG, Tao, Zaozhuang Shandong 277300 (CN); JIANG, Jie, Zaozhuang Shandong 277300 (CN); ZHANG, Kun, Zaozhuang Shandong 277300 (CN)
(74) Representative: Cabinet Chaillot
(86) International application number: PCT/CN2018/072919
(87) International publication number: WO 2019/010942

(57) **Abstract**

The present disclosure relates to a four-proofing safety tire including a conductive tread rubber layer, a supporting rubber layer, a tire explosion-proof rubber layer and a memory chip, wherein the conductive tread rubber layer can be formed by embedding, in the tread, a belt of narrow conductive rubber penetrated all the way to the inner cap ply or can be formed by adding carbon nanotubes or graphene conductive metamaterial to the tread formulation; the supporting rubber layer is a layer of rubber affixed on the inner wall of the sidewall when the tire is molded, which has a cross section with the shape of half slice of a willow leaf; the tire explosion-proof rubber layer is an explosion-proof layer added on the outer side of the inner liner provided on the inside of the ground-engaging tread of the tire; the memory chip is a special chip structure implanted in the sidewall portion of the tire without affecting the performance of the tire. The anti-static effect of the conductive tread formulation for the tread is excellent; the chip implantation technology can make it possible to trace the product information at any time; a layer of highly stable and highly viscous fluid coating inside the tire prevents air leakage; the support rubber is provided on the inner wall of the sidewall, which effectively reduces the damage to the tire caused by puncture to improve the air-captive property of the tire.

## Description

### TECHNICAL FIELD

The present disclosure relates to the field of tire manufacturing, and more particularly to a four-proofing safety tire.

### BACKGROUND ART

Most existing tires do not have explosion-proof, leak-proof and anti-static properties, or seriously affect the safety of use due to their low performances as follows. Sidewall blasting: Because the sidewalls are too thin, when a tire is scraped by the curbstone or squeezed by a hard object, it is easy to cause a punctured tire due to the rupture of the sidewall, leading to inability to continue the driving in mild cases and a major accident that causes car accident in severe cases. Tire punctured: When the tire is pressed against a sharp object such as a nail, the tire is easy to be punctured, resulting in a flat tire that disables the normal driving. In severe cases, steering failure of the vehicle and even a car accident may be caused. Static spark: In modern tire formulation, a large amount of white carbon black is used. The white carbon black may lead to poor conductivity of the tire, which can lead to such a large amount of static generated from the vehicle and tires during driving that cannot be promptly led out. Serious accumulation of static will lead to car spontaneous combustion due to ignition, gas station on fire and other serious accidents. In mild cases, it can also cause static sparks when opening or closing the vehicle door in winter, and false alarms of the trip computer, etc. The more advanced the vehicle the more serious the situation. For example, when a tire is punctured on any section of the highway, the vehicle cannot be ensured a safe travel to the next highway service area for tire changing and refinishing, and there is no guarantee that the chip implant is an authentic product to provide a basis for late tire tracking.

### SUMMARY OF THE DISCLOSURE

The purpose of the present disclosure is to provide a four-proofing safety tire to solve the above technical problems. To achieve the above object, the present disclosure uses the following technical scheme:
A four-proofing safety tire includes a conductive tread rubber layer, a supporting rubber layer, a tire explosion-proof rubber layer and a memory chip, wherein the conductive tread rubber layer can be formed by embedding, in the tread, a belt of narrow conductive rubber penetrated all the way to the inner cap ply or can be formed by adding carbon nanotubes or graphene conductive metamaterial to the tread formulation; the supporting rubber layer is a layer of rubber affixed on the inner wall of the sidewall when the tire is molded, which has a cross section with the shape of half slice of a willow leaf; the tire explosion-proof rubber layer is an explosion-proof layer added on the outer side of the inner liner provided on the inside of the ground-engaging tread of the tire; the memory chip is a special chip structure implanted in the sidewall portion of the tire without affecting the performance of the tire.

The formulation component of the conductive tread rubber layer is as follows: adding 1.5∼5.5 parts of carbon nanotubes or graphene materials to replace 2.5∼15 parts of the carbon black components in the conventional common tread formulation system.

The formulation component of tire explosion-proof rubber layer comprises 100 parts of matrix pure rubber, 60∼100 parts of carbon black, 0∼20 parts of carbon nanotubes, 5∼10 parts of environmentally friendly rubber oil, 2∼5 parts of antioxidant, 2∼5 parts of active agent, 2∼10 parts of resin, 1.5∼3.5 parts of accelerant and 1∼2 parts of vulcanizing agent, wherein the matrix rubber consists of natural rubber and styrene-butadiene rubber; the active agent consists of nano-zinc oxide and stearic acid; the carbon black is super abrasion furnace black; the carbon nanotubes are multi-walled carbon nanotubes; the environmentally friendly rubber oil is industrial-grade mineral oil; the accelerant includes accelerant NOBS and accelerant DPG (both used); the antioxidant includes non-polluting antioxidant 4020 and antioxidant RD (both used); the resin is reinforcing resin; the vulcanizing agent is insoluble sulfur.

The formulation component of supporting rubber layer comprises 100 parts of matrix pure rubber, 50∼70 parts of carbon black, 2∼5 parts of environmentally friendly rubber oil, 2∼5 parts of antioxidant, 2∼5 parts of active agent, 2∼4 parts of adhesive, 1.5∼3.5 parts of accelerant and 1∼2 parts of vulcanizing agent, wherein the matrix rubber consists of isoprene rubber and Nd-BR; the active agent consists of nano-zinc oxide and stearic acid; the carbon black is super abrasion furnace black; the environmentally friendly rubber oil is industrial-grade mineral oil; the accelerant includes accelerant NOBS and accelerant TIBTD (both used); the antioxidant includes non-polluting antioxidant 4020 and antioxidant RD (both used); the vulcanizing agent is insoluble sulfur.

The memory chip concentrates production, test, and raw material data in the chip structure for tracing product production information and preventing fake and shoddy goods.

The beneficial effects of the disclosure include: the anti-static effect of the conductive tread formulation for the tread according to the disclosure is excellent; the chip implantation technology can make it possible to trace the product information at any time; a layer of highly stable and highly viscous fluid coating inside the tire prevents air leakage; the support rubber is provided on the inner wall of the sidewall, which effectively reduces the damage to the tire caused by puncture to improve the air-captive property of the tire.

### BRIEF DESCRIPTION OF THE DRAWINGS

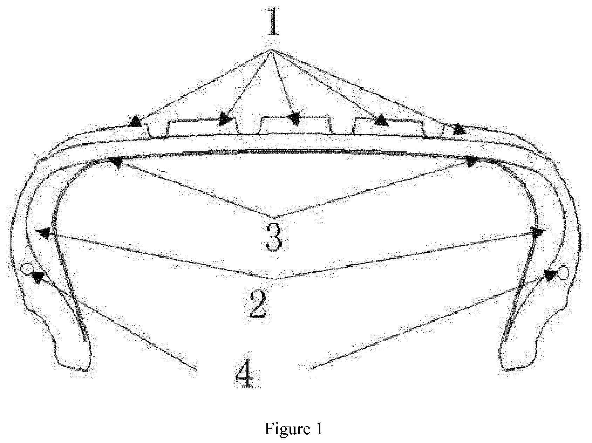

FIG. 1 is a structural view of the disclosure.

In which: 1. conductive tread rubber layer; 2. supporting rubber layer; 3. tire explosion-proof rubber layer; 4. memory chip

### DETAILED DESCRIPTION OF THE PREFERRED EMBODIMENTS

The disclosure will be further described in detail as follows with reference to the drawings and embodiments.

As shown in FIG. 1, a four-proofing safety tire includes a conductive tread rubber layer 1, a supporting rubber layer 2, a tire explosion-proof rubber layer 3 and a memory chip 4, wherein the conductive tread rubber layer 1 can be formed by embedding, in the tread, a belt of narrow conductive rubber penetrated all the way to the inner cap ply, both to maintain the original properties of the tread and to conduct the internal static to the surface of the tread through the conductive rubber strip to discharge the static, or can be formed by adding carbon nanotubes or graphene conductive metamaterial to the tread formulation, which obviously improves the conductivity of the tread and can promptly lead out the static to ensure the safe use of the vehicle; the supporting rubber layer 2 is a layer of rubber affixed on the inner wall of the sidewall when the tire is molded, which has a cross section with the shape of half slice of a willow leaf, wherein since the sidewall supporting rubber is thicker, the sidewall can not only maintain good flexural and shock absorbing properties, but also is able to resist blasting caused by scratching hard objects so that even if the air leakage is caused by damage, the good support of the tire can still be counted on to maintain a certain driving ability of the vehicle; the tire explosion-proof rubber layer 3 is an explosion-proof layer added on the outer side of the inner liner provided on the inside of the ground-engaging tread of the tire, wherein the explosion-proof layer has strong puncture-resistant property to effectively avoid the flat tire caused by puncture; the memory chip 4 is a special chip structure implanted in the sidewall portion of the tire without affecting the performance of the tire. The memory chip concentrates production, test, and raw material data in the chip structure for tracing product production information and preventing fake and shoddy goods.

The formulation component of the conductive tread rubber layer is as follows: adding 1.5∼5.5 parts of carbon nanotubes or graphene materials to replace 2.5∼15 parts of the carbon black components in the conventional common tread formulation system, making the carbon nanotubes or graphene to produce conductive paths to improve the conductive properties of the rubber compound.

The formulation component of tire explosion-proof rubber layer comprises 100 parts of matrix pure rubber, 60∼100 parts of carbon black, 0∼20 parts of carbon nanotubes, 5∼10 parts of environmentally friendly rubber oil, 2∼5 parts of antioxidant, 2∼5 parts of active agent, 2∼10 parts of resin, 1.5∼3.5 parts of accelerant and 1∼2 parts of vulcanizing agent, wherein the matrix rubber consists of natural rubber and styrene-butadiene rubber; the active agent consists of nano-zinc oxide and stearic acid; the carbon black is super abrasion furnace black; the carbon nanotubes are multi-walled carbon nanotubes; the environmentally friendly rubber oil is industrial-grade mineral oil; the accelerant includes accelerant NOBS and accelerant DPG (both used); the antioxidant includes non-polluting antioxidant 4020 and antioxidant RD (both used); the resin is reinforcing resin; the vulcanizing agent is insoluble sulfur. The advantages of this formulation component are high tear resistance, high modulus, and high strength and so on.

The formulation component of supporting rubber layer comprises 100 parts of matrix pure rubber, 50∼70 parts of carbon black, 2∼5 parts of environmentally friendly rubber oil, 2∼5 parts of antioxidant, 2∼5 parts of active agent, 2∼4 parts of adhesive, 1.5∼3.5 parts of accelerant and 1∼2 parts of vulcanizing agent, wherein the matrix rubber consists of isoprene rubber and Nd-BR; the active agent consists of nano-zinc oxide and stearic acid; the carbon black is super abrasion furnace black; the environmentally friendly rubber oil is industrial-grade mineral oil; the accelerant includes accelerant NOBS and accelerant TIBTD (both used); the antioxidant includes non-polluting antioxidant 4020 and antioxidant RD (both used); the vulcanizing agent is insoluble sulfur. The advantages of this formulation component are high hardness, high modulus, low heat generation, high temperature resistance and so on.

The anti-static effect of the conductive tread formulation for the tread according to the disclosure is excellent; the chip implantation technology can make it possible to trace the product information at any time; a layer of highly stable and highly viscous fluid coating inside the tire prevents air leakage; the support rubber is provided on the inner wall of the sidewall, which effectively reduces the damage to the tire caused by puncture to improve the air-captive property of the tire.

The above is the preferred embodiments of the present disclosure. For those of ordinary skill in the art, changes, modifications, substitutions and variations to the embodiments may still fall within the protection scope of the present disclosure without departing from the principle and spirit of the disclosure in accordance with the teachings of the disclosure.

## Claims

1. A four-proofing safety tire, wherein it includes a conductive tread rubber layer, a supporting rubber layer, a tire explosion-proof rubber layer and a memory chip, wherein the conductive tread rubber layer can be formed by embedding, in the tread, a belt of narrow conductive rubber penetrated all the way to the inner cap ply or can be formed by adding carbon nanotubes or graphene conductive metamaterial to the tread formulation; the supporting rubber layer is a layer of rubber affixed on the inner wall of the sidewall when the tire is molded, which has a cross section with the shape of half slice of a willow leaf; the tire explosion-proof rubber layer is an explosion-proof layer added on the outer side of the inner liner provided on the inside of the ground-engaging tread of the tire; the memory chip is a special chip structure implanted in the sidewall portion of the tire without affecting the performance of the tire.

2. The four-proofing safety tire according to claim 1, wherein the formulation component of the conductive tread rubber layer is as follows: adding 1.5∼5.5 parts of carbon nanotubes or graphene materials to replace 2.5∼15 parts of the carbon black components in the conventional common tread formulation system.

3. The four-proofing safety tire according to claim 1, wherein the formulation component of tire explosion-proof rubber layer comprises 100 parts of matrix pure rubber, 60∼100 parts of carbon black, 0∼20 parts of carbon nanotubes, 5∼10 parts of environmentally friendly rubber oil, 2∼5 parts of antioxidant, 2∼5 parts of active agent, 2∼10 parts of resin, 1.5∼3.5 parts of accelerant and 1∼2 parts of vulcanizing agent, wherein the matrix rubber consists of natural rubber and styrene-butadiene rubber; the active agent consists of nano-zinc oxide and stearic acid; the carbon black is super abrasion furnace black; the carbon nanotubes are multi-walled carbon nanotubes; the environmentally friendly rubber oil is industrial-grade mineral oil; the accelerant includes accelerant NOBS and accelerant DPG (both used); the antioxidant includes non-polluting antioxidant 4020 and antioxidant RD (both used); the resin is reinforcing resin; the vulcanizing agent is insoluble sulfur.

4. The four-proofing safety tire according to claim 1, wherein the formulation component of supporting rubber layer comprises 100 parts of matrix pure rubber, 50∼70 parts of carbon black, 2∼5 parts of environmentally friendly rubber oil, 2∼5 parts of antioxidant, 2∼5 parts of active agent, 2∼4 parts of adhesive, 1.5∼3.5 parts of accelerant and 1∼2 parts of vulcanizing agent, wherein the matrix rubber consists of isoprene rubber and Nd-BR; the active agent consists of nano-zinc oxide and stearic acid; the carbon black is super abrasion furnace black; the environmentally friendly rubber oil is industrial-grade mineral oil; the accelerant includes accelerant NOBS and accelerant TIBTD (both used); the antioxidant includes non-polluting antioxidant 4020 and antioxidant RD (both used); the vulcanizing agent is insoluble sulfur.

5. The four-proofing safety tire according to claim 1, wherein the memory chip concentrates production, test, and raw material data in the chip structure for tracing product production information and preventing fake and shoddy goods.
